# EUROPEAN PATENT APPLICATION

(11) **EP 3 031 616 A1**
(43) Date of publication of application: **15.06.2016**
(21) Application number: 14862702.9
(22) Date of filing: 25.07.2014
(51) Int. Cl.: B60B 9/04, B60C 7/00, B60C 7/18

(54) **NON-PNEUMATIC TIRE**

(30) Priority: 12.11.2013 JP 2013234150
(71) Applicant: Bridgestone Corporation, Tokyo 104-8340 (JP)
(72) Inventor: KYO Soichi, Kodaira-shi Tokyo 187-8531 (JP); NISHIMURO Youichi, Kodaira-shi Tokyo 187-8531 (JP); NISHIDA Masashi, Kodaira-shi Tokyo 187-8531 (JP); ABE Akihiko, Kodaira-shi Tokyo 187-8531 (JP)
(74) Representative: Oxley, Robin John George
(86) International application number: PCT/JP2014/069728
(87) International publication number: WO 2015/072183

(57) **Abstract**

A non-pneumatic tire is provided including an attachment body (11) attached to an axle, a ring member (14) including an inner tubular body (12) mounted onto the attachment body (11) and an outer tubular body (13) configured to surround the inner tubular body (12) from the outside in a tire radial direction, and a plurality of connecting members (15) disposed between the inner tubular body (12) and the outer tubular body (13) in a tire circumferential direction and configured to connect the tubular bodies (12) and (13) to each other, wherein at least a portion of the ring member (14) and the plurality of connecting members (15) are integrally formed of a synthetic resin material having a breaking elongation of 8.0% or more obtained by a measurement method (23 °C) pursuant to JIS K7161 and a Charpy impact value of 9.4 kJ/m² or more obtained by a 23 °C Charpy impact test pursuant of ISO 179-1.

## Description

### [Technical Field]

The present invention relates to a non-pneumatic tire that can be used without filling it with pressurized air.

Priority is claimed on Japanese Patent Application No. 2013-234150, filed November 12, 2013, the content of which is incorporated herein by reference.

### [Background Art]

In a pneumatic tire of the related art that is filled with pressurized air and used, occurrence of a blowout is a structurally unavoidable problem.

In order to solve this problem, in recent years, for example, as disclosed in the following Patent Document 1, a non-pneumatic tire including an attachment body attached to an axle, a ring-shaped body configured to surround the attachment body from the outside in a tire radial direction, and a plurality of connecting members disposed between the attachment body and the ring-shaped body in a tire circumferential direction has been proposed.

### [Document of Related Art]

### [Patent Document]

[Patent Document 1] Japanese Unexamined Patent Application, First Publication No. 2011-156905

### [Summary of Invention]

### [Technical Problem]

However, in the non-pneumatic tire of the related art, upon assembly, both end portions of each of the plurality of connecting members should be connected to the ring-shaped body or the attachment body, and thus the connection not only takes much time to be manufactured but also hinders reduction in weight. In addition, there is room for improvement in providing excellent durability to the non-pneumatic tire.

In consideration of the above-mentioned circumstances, the present invention is directed to provide a non-pneumatic tire capable of facilitating assembly thereof, suppressing an increase in weight and having excellent durability.

### [Solution to Problem]

A non-pneumatic tire of the present invention includes an attachment body attached to an axle; a ring member including an inner tubular body mounted on the attachment body and an outer tubular body configured to surround the inner tubular body from the outside in a tire radial direction; and a plurality of connecting members disposed between the inner tubular body and the outer tubular body in a tire circumferential direction and configured to connect the tubular bodies to each other, wherein at least a portion of the ring member and the plurality of connecting members are integrally formed of a synthetic resin material having a breaking elongation of 8.0% or more obtained by a measurement method (23 °C) pursuant to JIS K7161 and a Charpy impact value of 9.4 kJ/m² or more obtained by a 23 °C Charpy impact test pursuant to ISO 179-1.

In the present invention, since at least the portion of the ring member and the plurality of connecting members are integrally formed, upon assembly of the non-pneumatic tire, even when both end portions of each of the plurality of connecting members are not connected to the inner tubular body and the outer tubular body, since it is sufficient for the case body in which at least the portion of the ring member and the plurality of connecting members are integrally formed to be mounted on the attachment body, a manufacturing time can be reduced.

In addition, since at least the portion of the ring member and the plurality of connecting members are integrally formed, for example, an increase in weight can be suppressed in comparison with the case in which both end portions of the connecting member are connected to the inner tubular body and the outer tubular body using fastening members or the like.

Further, since the above-mentioned breaking elongation of the synthetic resin material that integrally forms at least the portion of the ring member and the plurality of connecting members is set within the above-mentioned range, a deformation volume of the portion of the non-pneumatic tire formed of the synthetic resin material before resulting in rupture can be sufficiently secured.

Moreover, since the Charpy impact value of the synthetic resin material is set within the above-mentioned range, sufficient resistance with respect to progress of cracks can be provided in the portion of the non-pneumatic tire formed of the synthetic resin material.

From the above, necessary and sufficient durability can be reliably provided to the non-pneumatic tire.

Here, the connecting members may each include a first elastic connecting plate and a second elastic connecting plate that connect the tubular bodies to each other, one end portion of the first elastic connecting plate connected to the outer tubular body may be disposed closer to one side in the tire circumferential direction than the other end portion connected to the inner tubular body, one end portion of the second elastic connecting plate connected to the outer tubular body may be disposed closer to the other side in the tire circumferential direction than the other end portion connected to the inner tubular body, the plurality of first elastic connecting plates may be disposed in the tire circumferential direction at one position in a tire widthwise direction, and the plurality of second elastic connecting plates may be disposed in the tire circumferential direction at another position in the tire widthwise direction different from the one position in the tire widthwise direction.

In this case, since the plurality of first elastic connecting plates are disposed in the tire circumferential direction at one position in the tire widthwise direction and the plurality of second elastic connecting plates are disposed in the tire circumferential direction at the other position in the tire widthwise direction, interference between the connecting members neighboring in the tire circumferential direction can be suppressed, and restrictions on the number disposed can be suppressed.

In addition, since the one end portion of the first elastic connecting plate connected to the outer tubular body is disposed closer to one side in the tire circumferential direction than the other end portion connected to the inner tubular body and the one end portion of the second elastic connecting plate connected to the outer tubular body is disposed closer to the other side in the tire circumferential direction than the other end portion connected to the inner tubular body, when an external force is applied to the non-pneumatic tire, the first elastic connecting plate and the second elastic connecting plate can be easily elastically deformed, and flexibility can be provided to the non-pneumatic tire to secure good ride comfort characteristics.

In addition, the ring member may be split into one split ring member disposed at one side in the tire widthwise direction and another split ring member disposed at the other side in the tire widthwise direction, the one split ring member may be integrally formed with the first elastic connecting plate, and the other split ring member may be integrally formed with the second elastic connecting plate.

In this case, in the first split case body in which the one split ring member and the first elastic connecting plate are integrally formed and the second split case body in which the other split ring member and the second elastic connecting plate are integrally formed, a plurality of plates of only one side of the first elastic connecting plates and the second elastic connecting plates extending in a certain direction in a side view of the tire when the tire is seen in the tire widthwise direction are disposed between the outer tubular body and the inner tubular body 12 and other plates extending in the other direction are not disposed.

For this reason, when the ring member and the connecting members are formed, first, as the first and second split case bodies having structures that can be simply and easily formed are respectively formed, in comparison with the case in which the ring member and the connecting members are integrally formed as a whole to form a case body having a complicated structure, the non-pneumatic tire can be easily and reliably formed.

Further, the one split ring member and first elastic connecting plate as well as the other split ring member and second elastic connecting plate may be integrally formed by injection molding.

In this case, since the above-mentioned first split case body and second split case body are integrally formed by injection molding, the non-pneumatic tire can be more easily formed.

However, as described above, in the split case bodies, since only one of the elastic connecting plates is disposed between the outer tubular body and the inner tubular body, when the split case bodies are integrally formed by injection molding, since a molten resin can easily and reliably arrive at corners in a mold, a structure of the mold can be suppressed from becoming complicated, and the non-pneumatic tire can be more easily and reliably formed.

One end portions of the first elastic connecting plate and the second elastic connecting plate of the one connecting member may be disposed at different positions in the tire widthwise direction and connected to the same position in the tire circumferential direction on an inner circumferential surface of the outer tubular body, and the connecting members may be line-symmetry formed with respect to an imaginary line extending in the tire radial direction and passing through each of the one end portions in a side view of the tire when the tire is seen from the tire widthwise direction.

In this case, since the connecting members form the line symmetry with respect to the imaginary line in the side view of the tire, occurrence of a difference between a spring constant along one side in the tire circumferential direction of the non-pneumatic tire and a spring constant along the other side can be suppressed, and good maneuverability can be provided.

### [Advantageous Effects of Invention]

According to the embodiment, it is possible to provide a non-pneumatic tire in which assembly thereof can be facilitated, an increase in weight can be suppressed, and excellent durability can be provided.

### [Brief Description of Drawings]

Fig. 1 is a schematic perspective view of a non-pneumatic tire of an embodiment according to the present invention, a portion of which is exploded.
Fig. 2 is a tire side view when the non-pneumatic tire shown in Fig. 1 is seen from one side in a tire widthwise direction.
Fig. 3 is a side view, in the non-pneumatic tire shown in Fig. 1, when a first split case body, in which one of side split ring members and a first elastic connecting plate are integrally formed, is seen from the one side in the tire widthwise direction, or a side view when a second split case body, in which another split ring member and a second elastic connecting plate are integrally formed, is seen from the other side in the tire widthwise direction.
Fig. 4 is an enlarged view showing a major part of Fig. 2.
Fig. 5 is a schematic perspective view of an integrated mold case body, in the non-pneumatic tire shown in Fig. 1, in which the first split case body and the second split case body are integrally formed.

### [Description of Embodiment]

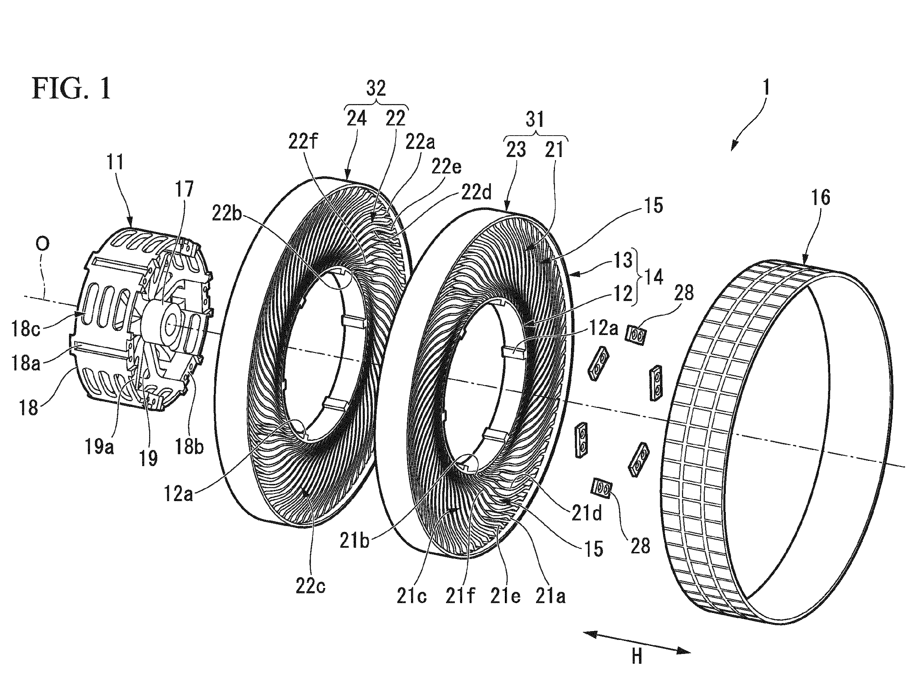

Hereinafter, an embodiment of a non-pneumatic tire according to the present invention will be described with reference to Figs. 1 to 4.

A non-pneumatic tire 1 includes an attachment body 11 attached to an axle (not shown), a ring member 14 including an inner tubular body 12 externally mounted on the attachment body 11 and an outer tubular body 13 configured to surround the inner tubular body 12 from the outside in a tire radial direction, a plurality of connecting members 15 disposed between the inner tubular body 12 and the outer tubular body 13 in a tire circumferential direction and configured to relatively elastically displaceably connect the tubular bodies 12 and 13 to each other, and a tread member 16 disposed at an outer circumferential surface of the outer tubular body 13 throughout the entire circumference.

Here, the attachment body 11, the inner tubular body 12, the outer tubular body 13 and the tread member 16 are disposed coaxially with a common axis. Hereinafter, the common axis is referred to as an axis O, a direction along the axis O is referred to as a tire widthwise direction H, a direction perpendicular to the axis O is referred to as a tire radial direction, and a direction around the axis O is referred to as a tire circumferential direction. Further, the attachment body 11, the inner tubular body 12, the outer tubular body 13 and the tread member 16 are disposed such that central portions in the tire widthwise direction H coincide with each other.

In the ring member 14, the size, i.e., width, of the outer tubular body 13 in the tire widthwise direction H is larger than that of the inner tubular body 12. In addition, a plurality of protrusion portions 12a protruding inward in the tire radial direction and extending throughout the entire length in the tire widthwise direction H are disposed at an inner circumferential surface of the inner tubular body 12 at intervals in the tire circumferential direction.

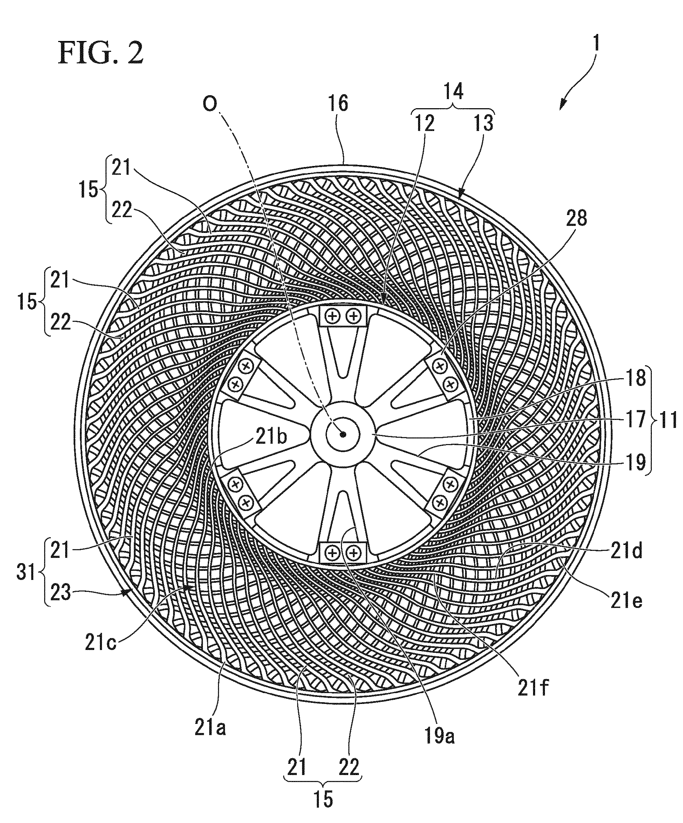

As shown in Figs. 1 and 2, the attachment body 11 includes a mounting rim section 17 on which a front end portion of the axle is mounted, an outer ring section 18 configured to surround the mounting rim section 17 from the outside in the tire radial direction, and a plurality of ribs 19 configured to connect the mounting rim section 17 and the outer ring section 18.

The mounting rim section 17, the outer ring section 18 and the ribs 19 are integrally formed of a metal material such as an aluminum alloy or the like. The mounting rim section 17 and the outer ring section 18 are formed in a cylindrical shape and disposed coaxially with the axis O. The plurality of ribs 19 are disposed at equal intervals in the circumferential direction.

A plurality of key groove sections 18a recessed inward in the tire radial direction and extending in the tire widthwise direction H are formed in an outer circumferential surface of the outer ring section 18 at intervals in the tire circumferential direction. In the outer circumferential surface of the outer ring section 18, each of the key groove sections 18a is opened at one side of both ends of the tire widthwise direction H and closed at the other side. The protrusion portions 12a of the inner tubular body 12 of the ring member 14 are fitted into the key groove sections 18a.

Further, in wall surfaces that define the key groove section 18a, a pair of sidewall surfaces that are opposite to each other in the tire circumferential direction and a bottom wall surface form a right angle. In addition, in outer surfaces of the protrusion portion 12a, a pair of sidewall surfaces that rise from an inner circumferential surface of the inner tubular body 12 and a top wall surface that is directed inward in the tire radial direction form a right angle. Sizes in the tire circumferential direction of the protrusion portions 12a and the key groove sections 18a are equal to each other.

Here, in an edge of one side in the tire widthwise direction H of the outer ring section 18, concave sections 18b recessed toward the other side in the tire widthwise direction H and into which plate members 28 are fitted are formed at positions corresponding to the key groove sections 18a. Through-holes are formed in the plate members 28, and in the wall surfaces that define the concave sections 18b, female screw sections in communication with the through-holes of the plate members 28 fitted into the concave sections 18b are formed in the wall surface directed toward the one side in the tire widthwise direction H. Further, a plurality of female screw sections and a plurality of through-holes are formed at intervals in the tire circumferential direction.

Then, in a state in which the inner tubular body 12 of the ring member 14 is fitted onto the attachment body 11 and the protrusion portions 12a are fitted into the key groove sections 18a, as bolts are screwed into the female screw sections through the through-holes of the plate members 28 fitted into the concave sections 18b, the ring member 14 is fixed to the attachment body 11. In this state, the protrusion portion 12a is sandwiched in the tire widthwise direction H between the plate member 28 and the other end wall surface, among the wall surfaces that define the key groove section 18a, disposed at the other end in the tire widthwise direction H and directed toward one side.

Further, in the outer ring section 18, a plurality of hole arrays 18c each having a plurality of weight-reducing holes passing in the tire radial direction are disposed at intervals in the tire widthwise direction H are formed between the key groove sections 18a neighboring in the tire circumferential direction at intervals in the tire circumferential direction. In addition, weight-reducing holes 19a passing in the tire widthwise direction H are also formed in the ribs 19.

The tread member 16 is formed in a cylindrical shape, and integrally covers an outer circumferential surface side of the outer tubular body 13 of the ring member 14 throughout the entire region. The tread member 16 is formed of, for example, vulcanized rubber obtained by vulcanizing natural rubber or/and a rubber composition, thermoplastic material, or the like. For example, a thermoplastic elastomer, thermoplastic resin, or the like, is used as the thermoplastic material. For example, an amide-based thermoplastic elastomer (TPA), ester-based thermoplastic elastomer (TPC), olefin-based thermoplastic elastomer (TPO), styrene-based thermoplastic elastomer (TPS), urethane-based thermoplastic elastomer (TPU), thermoplastic rubber cross-linked body (TPV), or other thermoplastic elastomer (TPZ), defined by JIS K6418, is used as the thermoplastic elastomer. For example, a urethane resin, olefin resin, vinyl chloride resin, polyamide resin, or the like, is used as the thermoplastic resin. Further, in view of abrasion resistance properties, the tread member 16 may be formed of the vulcanized rubber.

The connecting member 15 includes a first elastic connecting plate 21 and a second elastic connecting plate 22 that are configured to connect the inner tubular body 12 and the outer tubular body 13 of the ring member 14.

The plurality of (in the example shown, 60) connecting members 15 are provided in the tire circumferential direction such that the plurality of first elastic connecting plates 21 are disposed in the tire circumferential direction at positions of one side in the tire widthwise direction H and the plurality of second elastic connecting plates 22 are disposed in the tire circumferential direction at positions of the other side in the tire widthwise direction H, which are different from the position of the one side in the tire widthwise direction H.

That is, the plurality of first elastic connecting plates 21 are disposed in the tire circumferential direction at the same position in the tire widthwise direction H, and the plurality of second elastic connecting plates 22 are disposed in the tire circumferential direction at the same positions in the tire widthwise direction H separated from the first elastic connecting plate 21 in the tire widthwise direction H.

Further, the plurality of connecting members 15 are disposed between the inner tubular body 12 and the outer tubular body 13 of the ring member 14 at positions that are axially symmetrical with respect to the axis O. In addition, all of the connecting members 15 have the same shape and the same size. Further, a width of the connecting member 15 is smaller than that of the outer tubular body 13.

The first elastic connecting plates 21 neighboring in the tire circumferential direction do not come in contact with each other, and the second elastic connecting plates 22 neighboring in the tire circumferential direction do not come in contact with each other either. Further, the first elastic connecting plates 21 and the second elastic connecting plates 22 neighboring in the tire widthwise direction H do not come in contact with each other either.

Further, widths of the first elastic connecting plates 21 and the second elastic connecting plates 22 are equal to each other. In addition, thicknesses of the first elastic connecting plates 21 and the second elastic connecting plates 22 are also equal to each other.

Here, in the first elastic connecting plate 21, one end portion 21 a connected to the outer tubular body 13 is disposed closer to one side in the tire circumferential direction than the other end portion 21 b connected to the inner tubular body 12, and in the second elastic connecting plate 22, one end portion 22a connected to the outer tubular body 13 is disposed closer to the other side in the tire circumferential direction than the other end portion 22b connected to the inner tubular body 12.

In addition, the one end portions 21 a and 22a of the first elastic connecting plate 21 and the second elastic connecting plate 22 of the one connecting member 15 are disposed at different positions in the tire widthwise direction H and connected to the same position in the tire circumferential direction on the inner circumferential surface of the outer tubular body 13.

In the example shown, in the first elastic connecting plate 21 and the second elastic connecting plate 22, pluralities of curved sections 21d to 21f and 22d to 22f curved in the tire circumferential direction are formed at intermediate portions 21c and 22c disposed between the one end portions 21 a and 22a and the other end portions 21 b and 22b in a direction in which the connecting plates 21 and 22 extend when seen in a side view of the tire in which the tire 1 is seen from the tire widthwise direction H. In both of the connecting plates 21 and 22, among the plurality of curved sections 21d to 21 f and 22d to 22f, curving directions of the curved sections 21d to 21f and 22d to 22f neighboring each other in the above-mentioned extending direction are opposite.

The plurality of curved sections 21d to 21f formed in the first elastic connecting plate 21 have the first curved section 21d curved to protrude toward the other side in tire circumferential direction, the second curved section 21e disposed between the first curved section 21d and the one end portion 21a and curved to protrude toward the one side in the tire circumferential direction, and the third curved section 21f disposed between the first curved section 21d and the other end portion 21b and curved to protrude toward the one side in the tire circumferential direction.

The plurality of curved sections 22d to 22f formed in the second elastic connecting plate 22 have the first curved section 22d curved to protrude toward the one side in the tire circumferential direction, the second curved section 22e disposed between the first curved section 22d and the one end portion 22a and curved to protrude toward the other side in the tire circumferential direction, and the third curved section 22f disposed between the first curved section 22d and the other end portion 22b and curved to protrude toward the other side in the tire circumferential direction.

In the example shown, the first curved sections 21d and 22d have a larger radius of curvature when seen in the side view of the tire than the second curved sections 21e and 22e and the third curved sections 21f and 22f. Further, the first curved sections 21d and 22d are disposed at a central portion in the direction in which the first elastic connecting plate 21 and the second elastic connecting plate 22 extend.

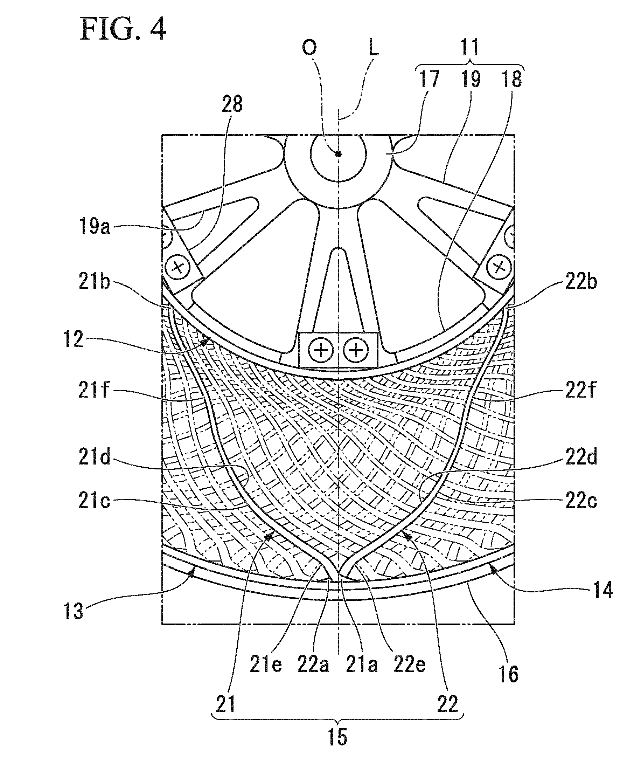

Further, lengths of the elastic connecting plates 21 and 22 are equal to each other, and as shown in Fig. 4, the other end portions 21b and 22b of both of the elastic connecting plates 21 and 22 are connected to positions separated at equal angles (for example, 20° or more and 135° or less) from positions opposite to the one end portions 21a and 22a of the outer circumferential surface of the inner tubular body 12 in the tire radial direction to one side and the other side about the axis O in the tire circumferential direction when seen in the side view of the tire. In addition, the first curved sections 21d and 22d, the second curved sections 21e and 22e and the third curved sections 21f and 22f of the first elastic connecting plate 21 and the second elastic connecting plate 22 have opposite protruding orientations in the tire circumferential direction but have the same size.

Accordingly, as shown in Fig. 4, shapes of the connecting members 15 when seen in the side view of the tire line-symmetry formed with respect to an imaginary line L extending in the tire radial direction and passing through each of the one end portions 21a and 22a of both of the connecting plates 21 and 22.

In addition, in each of the elastic connecting plates 21 and 22, one end side portion formed from a central portion in the above-mentioned extending direction to the one end portions 21a and 22a has a larger diameter than the other end side portion from the central portion to the other end portions 21b and 22b. Accordingly, a large load can be easily applied to the first and second elastic connecting plates 21 and 22 and strength of the one end side portion can be increased while suppressing an increase in weight of the connecting member 15 and securing flexibility of the connecting member 15. Further, the one end side portion and the other end side portion are smoothly connected with no step difference.

In the embodiment, the ring member 14 and the plurality of connecting members 15 are integrally formed of a synthetic resin material. In the synthetic resin material, a breaking elongation obtained by a measurement method (23 °C) pursuant to Japanese Industrial Standard JIS K7161 is 8.0% or more, and a Charpy impact value obtained by a 23 °C Charpy impact test pursuant to ISO 179-1 is 9.4 kJ/m² or more. Further, the synthetic resin material may be only one kind of resin material, a mixture including two or more kinds of resin materials, or a mixture including at least one kind of resin material and at least one kind of elastomer, and further, may include additives such as antioxidant, plasticizer, filler, pigment, or the like.

Further, in the embodiment, as shown in Fig. 1, the ring member 14 is split into one split ring member 23 disposed at one side in the tire widthwise direction H and another split ring member 24 disposed at the other side in the tire widthwise direction H. Further, in the example shown, the ring member 14 is split at a central portion in the tire widthwise direction H.

The one split ring member 23 is integrally formed with the first elastic connecting plate 21 and the other split ring member 24 is integrally formed with the second elastic connecting plate 22.

Further, in the embodiment, the one split ring member 23 and the first elastic connecting plate 21 as well as the other split ring member 24 and the second elastic connecting plate 22 are integrally formed with each other by injection molding.

Hereinafter, a member obtained by integrally forming the one split ring member 23 and the first elastic connecting plate 21 is referred to as a first split case body 31, and a member obtained by integrally forming the other split ring member 24 and the second elastic connecting plate 22 is referred to as a second split case body 32.

Here, the injection molding may be a general method of simultaneously forming the first and second split case bodies 31 and 32 each as a whole, may be insert molding of using one of the one and the other split ring members 23 and 24 as well as the first and second elastic connecting plates 21 and 22 in the first and second split case bodies 31 and 32 as an insert product and injection-molding the other member, or may be so-called two-color molding or the like.

In addition, in the first and second split case bodies 31 and 32, the one and the other split ring members 23 and 24, and the first and second elastic connecting plates 21 and 22 may be formed of different materials or may be formed of the same material.

Further, when the first and second split case bodies 31 and 32 are simultaneously injection-molded as a whole, the plurality of protrusion portions 12a formed at the inner tubular body 12 may be used as a gate portion.

In the first and second split case bodies 31 and 32, central portions in the tire widthwise direction H of the first and second elastic connecting plates 21 and 22, a central portion in the tire widthwise direction H of the outer tubular body 13 and a central portion in the tire widthwise direction H of the inner tubular body 12 coincide with each other, and the inner tubular body 12 has a smaller width than the outer tubular body 13 and has the same width as the first elastic connecting plate 21 and the second elastic connecting plate 22.

Then, edges in the tire widthwise direction H of the outer tubular body 13 of the one split ring member 23 and the outer tubular body 13 of the other split ring member 24 are connected by, for example, welding, fusion, adhesion, or the like. Further, among these, in the case of the welding, for example, heating plate welding or the like may be employed.

In addition, edges in the tire widthwise direction H of the inner tubular body 12 of the one split ring member 23 and the inner tubular body 12 of the other split ring member 24 are separated from each other in the tire widthwise direction H. Accordingly, generation of burrs on the inner circumferential surface of the inner tubular body 12 fitted onto the attachment body 11 is prevented.

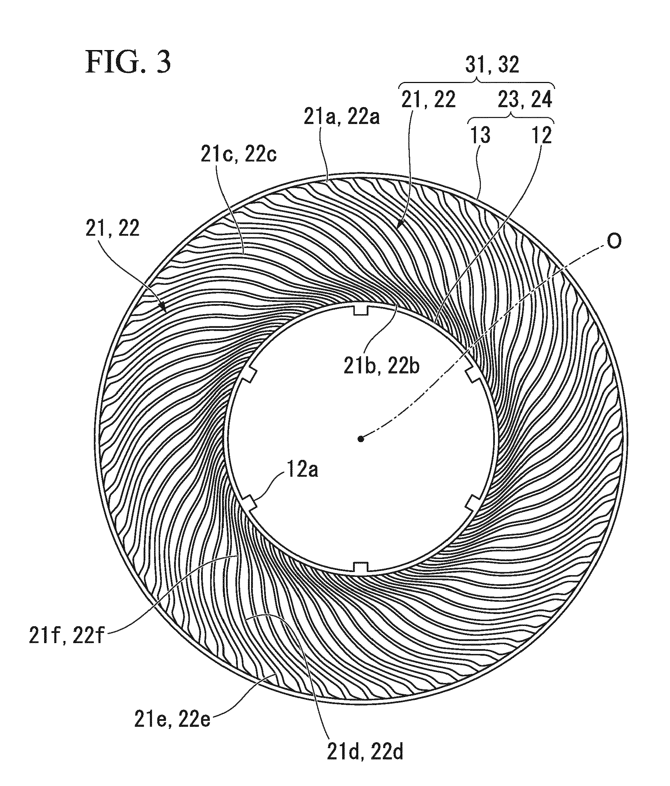

In addition, the first split case body 31 and the second split case body 32 have the same shape and the same size as shown in Fig. 3 in a state in which these bodies 31 and 32 are connected as described above.

Then, in a state in which the orientations of the split case bodies 31 and 32 in the tire widthwise direction H are opposite to each other while positions of the first split case body 31 and the second split case body 32 in the tire circumferential direction are aligned such that the connecting members 15 are line-symmetrically disposed as described above when seen in the side view of the tire, as the edges in the tire widthwise direction H of the outer tubular bodies 13 of the first split case body 31 and the second split case body 32 are matched and connected, the non-pneumatic tire 1 is obtained.

As described above, according to the non-pneumatic tire 1 of the embodiment, as the first split case body 31 in which the one split ring member 23 and the first elastic connecting plate 21 are integrally formed and the second split case body 32 in which the other split ring member 24 and the second elastic connecting plate 22 are integrally formed are provided, upon assembly of the non-pneumatic tire 1, even when both of the end portions 21a, 22a, and 21b and 22b of the plurality of connecting member 15 are not connected to the inner tubular body 12 and the outer tubular body 13, since it is sufficient for the first and second split case bodies 31 and 32 to be mounted on the attachment body 11, manufacturing time can be reduced.

In addition, since the first and second split case bodies 31 and 32 are provided, for example, an increase in weight can be suppressed in comparison with the case in which both of the end portions 21 a, 22a, 21b and 22b of the connecting members 15, the inner tubular body 12 and the outer tubular body 13 are connected using fastening members or the like.

Further, since the above-mentioned breaking elongation of the synthetic resin material of which the ring member 14 and the plurality of connecting member 15 are integrally formed is set within the above-mentioned range, a deformation volume of the ring member 14 and the plurality of connecting member 15 before resulting in rupture can be sufficiently secured.

However, since the Charpy impact value of the synthetic resin material is set within the above-mentioned range, sufficient resistance with respect to progress of cracks can be provided at the ring member 14 and the plurality of connecting members 15.

From the above, necessary and sufficient durability can be securely provided in the non-pneumatic tire 1.

Further, since the plurality of first elastic connecting plates 21 are disposed in the tire circumferential direction at the positions of the one side in the tire widthwise direction H and the plurality of second elastic connecting plates 22 are disposed in the tire circumferential direction at the positions of the other side in the tire widthwise direction H, the connecting members 15 neighboring in the tire circumferential direction can be suppressed from interfering with each other and limitations on the number disposed can be suppressed.

In addition, since the one end portion 21a of the first elastic connecting plate 21 connected to the outer tubular body 13 is disposed closer to one side in the tire circumferential direction than the other end portion 21b connected to the inner tubular body 12 and the one end portion 22a of the second elastic connecting plate 22 connected to the outer tubular body 13 is disposed closer to the other side in the tire circumferential direction than the other end portion 22b connected to the inner tubular body 12, when an external force is applied to the non-pneumatic tire 1, the first elastic connecting plate 21 and the second elastic connecting plate 22 can be easily elastically deformed and flexibility can be provided in the non-pneumatic tire 1 to secure good ride comfort characteristics.

Further, in each of the first split case body 31 and the second split case body 32, since a plurality of plates of only one side of the first elastic connecting plates 21 and the second elastic connecting plates 22 extending in a certain direction when seen in the side view of the tire are disposed between the outer tubular body 13 and the inner tubular body 12 and other plates extending in the other direction are not disposed, when the ring member 14 and the connecting member 15 are formed, first, as the first and second split case bodies 31 and 32 having simple structures that can be easily formed are formed, in comparison with the case in which the ring member 14 and the connecting members 15 are integrally formed as a whole to form a case body having a complicate structured, the non-pneumatic tire 1 can be easily and reliably formed.

In addition, since each of the first and second split case bodies 31 and 32 is integrally formed by injection molding, the non-pneumatic tire 1 can be more easily formed.

However, as described above, in each of the split case bodies 31 and 32, since only one side of both of the elastic connecting plates 21 and 22 is disposed between the outer tubular body 13 and the inner tubular body 12, when each of the split case bodies 31 and 32 is integrally formed by injection molding, a molten resin is likely to reliably arrive at corners in the mold, a structure of the mold can be suppressed from becoming complicated, and the non-pneumatic tire 1 can be more easily and reliably formed.

In addition, since the connecting members 15 are line symmetrically disposed with respect to the imaginary line L when seen in the side view of the tire, occurrence of a difference between a spring constant along the one side of the non-pneumatic tire 1 in the tire circumferential direction and a spring constant along the other side can be suppressed, and good maneuverability can be provided.

Further, the technical scope of the present invention is not limited to the embodiment and various modifications may be made without departing from the spirit of the present invention.

For example, the curving directions of the curved sections 21d to 21f in the first elastic connecting plate 21 and the curving directions of the curved section 22d to 22f in the second elastic connecting plate 22 are not limited to those of the embodiment but may be appropriately varied.

In addition, in the embodiment, while the configuration in which the first elastic connecting plate 21 and the second elastic connecting plate 22 are provided one by one as the connecting members 15 has been shown, instead of this, a configuration in which a plurality of first elastic connecting plates 21 and a plurality of second elastic connecting plates 22 are provided at one connecting member 15 at different positions in the tire widthwise direction H may be employed.

In addition, the plurality of connecting members 15 may be disposed between the inner tubular body 12 and the outer tubular body 13 in the tire widthwise direction H.

In addition, instead of the embodiment, for example, the other end portions 21b and 22b of the first elastic connecting plate 21 and the second elastic connecting plate 22 may be connected to positions opposite to each other with the axis O sandwiched therebetween in the tire radial direction on the outer circumferential surface of the inner tubular body 12, or may be connected to the one end portions 21a and 22a of the first elastic connecting plate 21 and the second elastic connecting plate 22 on the outer circumferential surface of the inner tubular body 12 at opposite positions in the tire radial direction.

In addition, instead of the embodiment, the one end portions 21 a and 22a of both of the connecting plates 21 and 22 may be connected to the inner circumferential surface of the outer tubular body 13 at different positions in the tire circumferential direction.

Further, a gap in the tire widthwise direction H may not be provided between the inner tubular body 12 of the one split ring member 23 and the inner tubular body 12 of the other split ring member 24.

In addition, the ring member 14 may be split into three or more parts in the tire widthwise direction H or may not be split.

Further, only the inner tubular body 12 of the ring member 14 and the connecting member 15 may be formed of a synthetic resin material, or only the outer tubular body 13 of the ring member 14 and the connecting member 15 may be formed of a synthetic resin material.

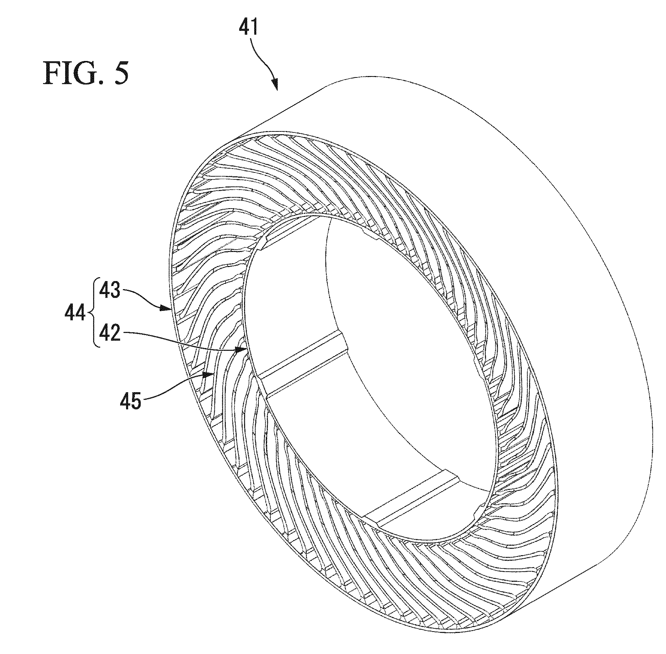

Further, as shown in Fig. 5, the first split case body 31 and the second split case body 32 may be integrally formed to provide an integrated mold case body 41.

The integrated mold case body 41 includes a ring member 44 including an inner tubular body 42 mounted on the attachment body 11 and an outer tubular body 43 configured to surround the inner tubular body 42 from the outside in the tire radial direction, and a plurality of connecting members 45 disposed between the inner tubular body 42 and the outer tubular body 43 in the tire circumferential direction and configured to relatively elastically displaceably connect the tubular bodies 42 and 43 to each other.

In addition, the components of the above-mentioned embodiment may be appropriately substituted with known components and the above-mentioned variants may be appropriately combined without departing from the spirit of the present invention.

Verification tests of the above-mentioned effects that were performed will be described next.

As examples, as shown in Table 1, seven kinds of non-pneumatic tires 1 in which the ring member 14 and the plurality of connecting members 15 were integrally formed of the synthetic resin material having the above-mentioned breaking elongation of 8.0% or more and the above-mentioned Charpy impact value of 9.4 kJ/m² or more were formed, and as comparative examples, as shown in Table 2, six kinds of non-pneumatic tires in which the ring member and the plurality of connecting members were integrally formed of the synthetic resin material having the above-mentioned breaking elongation of less than 8.0% or the above-mentioned Charpy impact value of less than 9.4 kJ/m² were formed. In these thirteen kinds of non-pneumatic tires, the size of the tire was 155/65R13, and the total weight of the ring member and the plurality of connecting members formed of the synthetic resin material was about 4 kg.

Then, with respect to the thirteen kinds of non-pneumatic tires, it was checked whether the tires broke when a compressive force of 6 kN was applied in the tire radial direction (a load test).

As a result, among the thirteen kinds of non-pneumatic tires, in the non-pneumatic tires using the synthetic resin material having the above-mentioned breaking elongation of 8.0% or more, it was confirmed that no tire broke (represented as ○ in Tables 1 and 2), and in the non-pneumatic tires using the synthetic resin material having the above-mentioned breaking elongation of less than 8.0%, it was confirmed that several connecting portions between the inner tubular body of the ring member and the connecting members broke (represented as × in Tables 1 and 2).

In addition, it was checked whether each of the thirteen kinds of non-pneumatic tires broke when the tire was naturally dropped from a position of a height of 3 m to the ground in a posture in which the axis O was directed in a horizontal direction (an impact test).

As a result, among the thirteen kinds of non-pneumatic tires, in the non-pneumatic tires employing the synthetic resin material having the above-mentioned Charpy impact value of 9.4 kJ/m² or more, it was confirmed that no tire broke (represented as ○ in Tables 1 and 2), and in the non-pneumatic tires employing the synthetic resin material having the above-mentioned Charpy impact value of less than 9.4 kJ/m², it was confirmed that several places in the outer tubular body of the ring member broke (represented as × of Tables 1 and 2).

Further, when the verification tests of the effects were performed using the non-pneumatic tires under the same conditions as Examples 1 to 7 except for using the integrated mold case body in which the first split case body and the second split case body were integrally formed, the same results as Examples 1 to 7 were obtained.

**[Table 1]**

| | Examples | | | | | | |
|---|---|---|---|---|---|---|---|
| | 1 | 2 | 3 | 4 | 5 | 6 | 7 |
| Kind of resin | PP | PPS/EL | PPS/EL | PPS/EL | PA9T/EL | PA9T/EL | SPS |
| Manufacturer | Prime Polymer Co., Ltd. | DIC Incorporated | DIC Incorporated | DIC Incorporated | Kuraray Co., Ltd. | Kuraray Co., Ltd. | Idemitsu Co., Ltd. |
| Grade | J-452HP | Z200J1 | PS-115-046 | Z300 | N1001A | N1006A | S105 |
| Breaking elongation | 430.0 | 32.5 | 49.6 | 33.6 | 12.7 | 17.8 | 8.0 |
| Charpy impact value (kJ/m²) | 16.0 | 29.6 | 35.3 | 46.3 | 9.4 | 61.1 | 14.0 |
| Tire estimation (Load test) | ○ | ○ | ○ | ○ | ○ | ○ | ○ |
| Tire estimation (Impact test) | ○ | ○ | ○ | ○ | ○ | ○ | ○ |

**[Table 2]**

| | Examples | | | | | |
|---|---|---|---|---|---|---|
| | 1 | 2 | 3 | 4 | 5 | 6 |
| Kind of resin | ABS | PVDC | PPS | PPS/EL | PPS/EL | PA9T |
| Manufacturer | Nippon Steel & Sumikin Chemicals Co., Ltd. | Dow Chemical Company | DIC Incorporated | DIC Incorporated | DIC Incorporated | Kuraray Co., Ltd. |
| Grade | EAT | SARAN resins | FZ2100 | Z200ES | Z200R1 | N1000A |
| Breaking elongation | 5.0 | 250.0 | 2.9 | 11.8 | 34.8 | 3.8 |
| Charpy impact value (kJ/m²) | 10.0 | 5.4 | 2.4 | 3.8 | 7.9 | 4.0 |
| Tire estimation (Load test) | × | ○ | × | ○ | ○ | × |
| Tire estimation (Impact test) | ○ | × | × | × | × | × |

### [Industrial Applicability]

In the non-pneumatic tire of the present invention, assembly thereof can be facilitated, an increase in weight can be suppressed, and excellent durability can be provided.

### [Reference Signs List]

- 1: non-pneumatic tire
- 11: attachment body
- 12: inner tubular body
- 13: outer tubular body
- 14: ring member
- 15: connecting member
- 21: first elastic connecting plate
- 22: second elastic connecting plate
- 21 a, 22a: one end portion
- 21b, 22b: other end portion
- 23: one split ring member
- 24: other split ring member
- H: tire widthwise direction
- L: imaginary line
- O: axis

## Claims

1. A non-pneumatic tire, comprising:
an attachment body attached to an axle;
a ring member comprising an inner tubular body mounted on the attachment body and an outer tubular body configured to surround the inner tubular body from the outside in a tire radial direction; and
a plurality of connecting members disposed between the inner tubular body and the outer tubular body in a tire circumferential direction and configured to connect the tubular bodies to each other,
wherein at least a portion of the ring member and the plurality of connecting members are integrally formed of a synthetic resin material having a breaking elongation of 8.0% or more obtained by a measurement method (23 °C) pursuant to JIS K7161 and a Charpy impact value of 9.4 kJ/m² or more obtained by a 23 °C Charpy impact test pursuant to ISO 179-1.

2. The non-pneumatic tire according to Claim 1, wherein the connecting members each comprise a first elastic connecting plate and a second elastic connecting plate that connect the tubular bodies to each other,
one end portion of the first elastic connecting plate connected to the outer tubular body is disposed closer to one side in the tire circumferential direction than the other end portion connected to the inner tubular body,
one end portion of the second elastic connecting plate connected to the outer tubular body is disposed closer to the other side in the tire circumferential direction than the other end portion connected to the inner tubular body, and
the plurality of first elastic connecting plates are disposed in the tire circumferential direction at one position in a tire widthwise direction, and the plurality of second elastic connecting plates are disposed in the tire circumferential direction at another position in the tire widthwise direction different from the one position in the tire widthwise direction.

3. The non-pneumatic tire according to Claim 2, wherein the ring member is split into one split ring member disposed at one side in the tire widthwise direction and another split ring member disposed at the other side in the tire widthwise direction,
the one split ring member is integrally formed with the first elastic connecting plate, and
the other split ring member is integrally formed with the second elastic connecting plate.

4. The non-pneumatic tire according to Claim 3, wherein the one split ring member and first elastic connecting plate as well as the other split ring member and second elastic connecting plate are integrally formed by injection molding.

5. The non-pneumatic tire according to Claim 2, wherein one end portions of the first elastic connecting plate and the second elastic connecting plate of the one connecting member are disposed at different positions in the tire widthwise direction and connected to the same position in the tire circumferential direction on an inner circumferential surface of the outer tubular body, and
the connecting members are line-symmetry formed with respect to an imaginary line extending in the tire radial direction and passing through each of the one end portions in a side view of the tire when the tire is seen from the tire widthwise direction.

6. The non-pneumatic tire according to Claim 3, wherein one end portions of the first elastic connecting plate and the second elastic connecting plate of the one connecting member are disposed at different positions in the tire widthwise direction and connected to the same position in the tire circumferential direction on an inner circumferential surface of the outer tubular body, and
the connecting members are line-symmetry formed with respect to an imaginary line extending in the tire radial direction and passing through each of the one end portions in a side view of the tire when the tire is seen from the tire widthwise direction.

7. The non-pneumatic tire according to Claim 4, wherein one end portions of the first elastic connecting plate and the second elastic connecting plate of the one connecting member are disposed at different positions in the tire widthwise direction and connected to the same position in the tire circumferential direction on an inner circumferential surface of the outer tubular body, and
the connecting members are line-symmetry formed with respect to an imaginary line extending in the tire radial direction and passing through each of the one end portions in a side view of the tire when the tire is seen from the tire widthwise direction.
